# EUROPEAN PATENT SPECIFICATION

(11) **EP 2 207 855 B1**
(45) Date of publication and mention of the grant of the patent: **27.03.2019**
(21) Application number: 08848176.7
(22) Date of filing: 06.11.2008
(51) Int. Cl.: D06N 7/00, C08L 13/02, C08L 21/02

(54) **A CARPET TILE AND METHOD FOR MAKING IT**
TEPPICHFLIESE UND VERFAHREN ZU DEREN HERSTELLUNG
DALLE DE MOQUETTE ET PROCÉDÉ DE FABRICATION

(30) Priority: 07.11.2007 AU 2007906126
(43) Date of publication of application: 21.07.2010
(73) Proprietor: Interface Aust Pty Limited, Surry Hills, NSW 2010 (AU)
(72) Inventor: WELLS, Keith, Robert, Picton NSW 2571 (AU); BOYD, Michael, Lindsay, Picton NSW 2571 (AU)
(74) Representative: Adam, Holger
(86) International application number: PCT/AU2008/001646
(87) International publication number: WO 2009/059366

(56) References cited:
- US-A- 4 689 256
- US-A1- 2006 134 374
- DATABASE WPI Week 199423 Thomson Scientific, London, GB; AN 1994-189097 XP002697388, & JP H06 128437 A (MITSUBISHI YUKA BADISCHE KK) 10 May 1994 (1994-05-10)
- DATABASE WPI Week 199138 Thomson Scientific, London, GB; AN 1991-277187 XP002697389, & JP H03 182582 A (SUMITOMO NAUGATUCK KK) 8 August 1991 (1991-08-08)
- DATABASE WPI Derwent Publications Ltd., London, GB; Class A32, AN 2003-723758, XP008135395 & FR 2 830 258 A1 (MONTAGNER B) 04 April 2003
- DATABASE WPI Derwent Publications Ltd., London, GB; Class A82, AN 2003-638271, XP008135397 & EP 1 327 714 A1 (WULFF GMBH & CO) 16 July 2003
- DATABASE WPI Derwent Publications Ltd., London, GB; Class A60, AN 2000-117749, XP008135396 & DE 198 29 788 A1 (HENKEL KGAA) 05 January 2000

## Description

### Technical Field

The present invention relates to a carpet tile, a method for making a carpet tile and to compositions for use in making a carpet tile.

### Background of the Invention

Carpets, such as free-lay carpet or backed carpet tiles are typically prepared as either a tufted or a fusion bonded carpet material having a wear fibrous or pile surface from which pile yarns upwardly project. Carpet tiles differ from the production of ordinary tufted or other fibrous-faced carpets because there is no requirement on a typical carpet for a heavy backing layer. In a carpet tile, a rigid stabilized mass of a thermoplastic backing layer is required in order to hold down the carpet tile so that it can function as a free-lay carpet tile. Generally, the backing layer has a high filler content (e.g., limestone) and is employed with various scrim materials such as glass fibres, polyester or a combinations thereof, to impart dimensional stability. Generally the thermoplastic backing layer is one or more polyvinyl chloride layers.

As an example, a tufted carpet tile generally comprises a primary backing base sheet material such as polyester having a plurality of tufted yarns such as Nylon® through the primary backing to form a wear surface of loop or cut pile (carpet pile). The primary backing is used to tuft the carpet yarn into and to provide the required top cloth of the product. A precoat of a latex type material such as EVA (polyethylene vinyl acetate) or carboxylated styrene-butadiene-styrene may be applied on the back (underside) surface to bond the yarn to the primary backing and to aid in the securing of the primary backing to the backing layer. The backing layer may be comprised of a first PVC layer, a fiberglass layer and a second PVC layer (reback layer) - the first layer of PVC bonding the primary backing to the fiberglass layer, the fiberglass layer ensuring dimensional stability of the carpet tile and the second layer of PVC gluing the layers above it and providing the final backing of the carpet tile.

In an alternative construction of the above carpet tiles, the PVC layer is replaced with a bitumen layer.

Fusion-bonded carpet generally has a similar backing to tufted carpet except that the fusion-bonded carpet has a plurality of cut pile yarns of nylon or other suitable fibrous material implanted in an adhesive layer, particularly thermoplastic such as PVC or hotmelt adhesive, which may be further laminated to a reinforcement or substrate layer of a woven or non-woven material such as fibreglass, Nylon®, polypropylene or polyester. The plurality of fibrous yarns are bonded to and extend generally upright from the adhesive base layer to form the wear surface.

The above constructions suffer from the disadvantages that the resulting carpet tile is not very flexible and has significant weight. The above constructions also suffer from the disadvantage that the carpet tiles are made from environmentally unfriendly materials. For example plasticizers used in the backing layer may be sourced from the oil/petroleum industry and one DOP (di-2-ethyl hexyl phthalate) used is listed as a potential carcinogen.

It would be desirable to provide a carpet tile which is lighter than previous carpet tile constructions. It would also be desirable to provide a carpet tile formed from more environmentally friendly materials.

JP H06 128437 A relates to a carpet coating resin composition, particularly useful as a backing coating agent of the vehicle for the fibrous interior material such as an automobile.

US 4,689,256 relates to a flame-resistant carpet tile having low smoke values and improved flame resistance, wherein the carpet tile comprises a primary backing having a fibrous face and a fibrous back, a barrier layer adjacent to fibrous back to an acrylic polymer heavily loaded with a metallic flame-retardant salt filler material which acrylic polymer is compatible with a vinyl chloride polymer layer and a relatively thick vinyl chloride polymer backing layer adhering to the barrier layer.

### Object of the Invention

It is an object of the present invention to substantially overcome or at least ameliorate one or more of the above disadvantages or at least provide a suitable alternative.

### Definitions

The following are some definitions that may be helpful in understanding the description of the present invention. These are intended as general definitions and should in no way limit the scope of the present invention to those terms alone, but are put forth for a better understanding of the following description.

Unless the context requires otherwise or specifically stated to the contrary, integers, steps, or elements of the invention recited herein as singular integers, steps or elements clearly encompass both singular and plural forms of the recited integers, steps or elements.

Throughout this specification, unless the context requires otherwise, the word "comprise", or variations such as "comprises" or "comprising", will be understood to imply the inclusion of a stated step or element or integer or group of steps or elements or integers, but not the exclusion of any other step or element or integer or group of elements or integers. Thus, in the context of this specification, the term "comprising" means "including principally, but not necessarily solely".

It will be understood that although the description of the carpet tile of the present invention has been given in terms of "layers", that following processing the carpet tile is a bonded unitary integral structure in which the individual layers are not necessarily readily discernible or removable from one another.

### Summary of the Invention

According to the first embodiment of the present invention, there is provided a method of making a carpet tile comprising:
coating a first layer of a PVC thermoplastic resin plastisol on a support surface;
optionally placing a dimensionally stable sheet material onto the top surface of the first layer and heating the layer to gel the layer and position the sheet material;
optionally applying a second layer of a PVC thermoplastic resin plastisol onto the gelled surface of the first layer;
precoating the underside of a primary backing having a fibrous wear-resistant face with a precoating composition for making a carpet tile comprising:
   at least one copolymer derived from an acrylic or methacrylic monomer and a styrenic monomer;
   at least one copolymer derived from an acrylic ester and a methacrylic ester;
   at least one thickener; and
      water;
   optionally coating a thermoplastic resin plastisol over the precoat layer;
   layering the precoated primary backing onto the top surface of the plastisol of the first or second thermoplastic resin layer;
   heating the carpet so formed to fuse the thermoplastic layers into an integrally-fused backing layer;
   cooling the carpet; and
   cutting the carpet into a carpet tile.
      (I) Preferably, in a first aspect, there is provided a precoating composition for making a carpet tile comprising:
         at least one copolymer derived from an acrylic or methacrylic monomer and a styrenic monomer;
         at least one copolymer derived from an acrylic ester and a methacrylic ester;
         at least one thickener; and
         water.
      (II) Preferably, in a second aspect, there is provided a method of making a precoated primary backing comprising:
         providing a primary backing layer including a fibrous face and an underside,
         precoating the underside of the primary backing layer by applying to the layer the precoating composition of the first aspect (I).
      (III) Preferably, in a third aspect, there is provided a precoated primary backing comprising:
         a primary backing having a fibrous face and an underside;
         a precoat layer on the underside of the primary backing formed from a composition comprising
         at least one copolymer derived from an acrylic or methacrylic monomer and a styrenic monomer;
         at least one copolymer derived from an acrylic ester and a methacrylic ester;
         at least one thickener; and
         water.
      (IV) Preferably, in a fourth aspect, there is provided a method of making a floor covering comprising:
         providing a primary backing having a fibrous face and an underside;
         precoating the underside of the primary backing layer by applying the precoating composition of the first aspect (I),
         applying a backing layer to the precoated primary backing layer, and
         curing the precoating composition.
      (V) Preferably, in a fifth aspect, there is provided a floor covering comprising:
         a primary backing having a fibrous face and an underside;
         a cured precoat layer on the underside of the primary backing formed from a composition comprising
            at least one copolymer derived from an acrylic or methacrylic monomer and a styrenic monomer;
            at least one copolymer derived from an acrylic ester and a methacrylic ester;
            at least one thickener; and
            water,
         and a backing layer fixed to the primary backing.

         According to another embodiment of the present invention, there is provided a carpet tile produced by the inventive-method.
      (VIII) Preferably, in an eighth aspect, there is provided the use of recycled glass as filler in a plastisol for the manufacture of a carpet tile.
      (IX) Preferably, in a ninth aspect, there is provided a composition for preparing a carpet tile comprising:
         a thermoplastic resin;
         at least one plasticizer; and
         recycled glass or recycled glass and limestone.
      (X) Preferably, in a tenth aspect, there is provided a composition for preparing a carpet tile comprising:
         a thermoplastic resin;
         a plasticizer which is a mixture of an epoxidized soybean oil with an acetic acid ester of castor oil, and where necessary a viscosity modifier; and
         a filler.
      (XI) Preferably, in an eleventh aspect, there is provided a method of making a floor covering comprising:
         providing a primary backing having a fibrous face and an underside;
         applying a backing layer to the primary backing layer, the backing layer including a layer formed from the composition of the ninth or tenth aspect (X).
      (XII) Preferably, in a twelfth aspect, there is provided a floor covering comprising:
         a primary backing having a fibrous face and an underside;
         and a backing layer fixed to the primary backing, the backing layer including a layer formed from the composition of the ninth (IX) or tenth (X) aspect.
      (XIII) Preferably, in a thirteenth aspect, there is provided a method of making a carpet tile comprising:
         coating a first layer of a thermoplastic resin plastisol on a support surface
         optionally placing a dimensionally stable sheet material onto the top surface of the first layer and heating the layer to gel the layer and position the sheet material;
         optionally applying a second layer of a thermoplastic resin plastisol onto the gelled surface of the first layer, the thermoplastic resin of at least one of the first or second layers formed from the composition of the ninth (IX) or tenth (X) aspect;
         optionally precoating the underside of a primary backing having a fibrous wear-resistant face with a composition of the first aspect (I);
         optionally coating a thermoplastic resin plastisol over the precoat layer;
         layering the primary backing onto the top surface of the plastisol of the first or second thermoplastic resin layer; and
         heating the carpet so formed to fuse the thermoplastic layers into an integrally-fused backing layer,
         cooling the carpet, and
         cutting the carpet into a carpet tile.
      (XIV) Preferably, in a fourteenth aspect, there is provided a carpet tile produced by the method of the thirteenth aspect (XIII).

### Brief Description of the Drawings

A preferred embodiment of the present invention will now be described, by way of an example only, with reference to the accompanying drawings wherein:

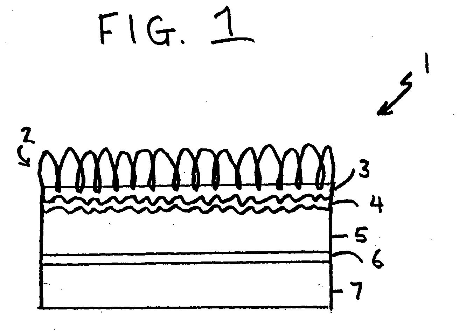

Figure 1 is a cross-sectional view of a carpet tile in accordance with one embodiment of the present invention.

### Detailed Description of the Preferred Embodiments

The present disclosure relates to a carpet tile comprising a primary backing including a fibrous wear surface and a backing layer.

### Primary backing layer

The primary backing may be a tufted fibrous layer or a fusion bonded material. When a tufted fibrous layer is used, it may be prepared by feeding the primary backing material to a conventional tufting machine which tufts fibres through interstices in the material. Tufting is typically performed such the resulting tufts protrude from the underside face with back stitches which hold the tufts in place on the topside of the material during processing

The primary backing is suitably formed from a woven or non-woven synthetic or non-synthetic fibre. Suitably a thermoplastic backing such as a woven polypropylene backing or a non-woven polyester, with a fibrous face or wear surface such as a tufted face, and a fibrous back surface, such as a loop or tufted surface where the carpet tile is tufted is used. A polyester such as Lutradur® is preferably used when making a PVC backed tile because it does not suffer too much from shrinkage due to heat during the gelling process thus minimizing the risk of tile uplift due to not enough drape. Other suitable backings include Nylon®, fibreglass, cotton, jute, rayon, paper, natural or synthetic rubbers, sponge or foam rubbers, polychloroprene, acrylonitrile-butadiene copolymers, ethylene-propylene-diene rubbers, petroleum resin, vinyl polymers (such as polyvinylchloride, polyvinylidene chloride, polyvinyl acetate, polyvinyl acetal, polyvinyl butyral, copolymers or mixtures thereof), polybutene resin, polyisobutene-butadiene resins and copolymers and mixtures thereof.

The fibrous material and yarns employed in the carpet tile as face and back yarn with the primary backing may comprise synthetic, natural or a combination of synthetic and natural fibre, such as but not limited to polyamides like nylon, olefins like polypropylene, wool and wool blends, cotton, acrylic, acrylic-nylon blends, polyester yarns and combinations and blends thereof.

For a fusion bonded carpet tile, the fibrous material and yarns employed in the carpet tile are implanted into a material such as PVC or a hot melt adhesive which may be laminated to a substrate such as a woven or nonwoven material such as fibreglass, Nylon®, polypropylene or polyester.

The primary backing layer may be precoated with Latex or with a precoating composition used in the present invention prior to applying a backing layer. Typically the precoat is applied to cover the loop backs and to lock in the loops.

### Latex

The latex may be an EVA latex or another vinyl polymer or acrylic-like polymer latex. For example, the latex may be a copolymer of acrylic and methacrylic acid and alkyl acrylates and esters (such as ethyl acrylate or methyl acrylate), acrylic-styrene copolymers, acrylonitrile-styrene copolymers, vinylidene chloride-acrylonitrile copolymers, and combinations thereof. Suitably the latex is non-halogenated. Other suitable latex materials which can be use include other vinyl, short-chain carboxylic acid copolymers, butadiene-acrylonitrile copolymer, styrene-butadiene, carboxylated styrene-butadiene, carboxylated styrene-butadiene-styrene. Urethane, PVC, acrylics or vinylidine chloride may also be used.

### Precoating composition

A precoating composition for making a carpet tile comprises: at least one copolymer derived from an acrylic or methacrylic monomer and a styrenic monomer; at least one copolymer derived from an acrylic ester and a methacrylic ester; at least one thickener; and water. The precoating composition may further comprise an antibacterial, a fire retardant and/or a surfactant. A suitable antibacterial is zinc omadine - zinc2-pyridinethiol-1-oxide. A suitable fire retardant is aluminium hydroxide. A suitable surfactant is sodium lauryl sulphate.

The copolymer derived from an acrylic or methacrylic monomer and a styrenic monomer is suitably an acrylate/styrene copolymer dispersion such as that supplied by BASF Corporation as Acronal® S 728 na. Acronal® S 728 na is a butyl acrylate/styrene copolymer dispersion and contains water in an amount of 49 to 51%w/w and a proprietory copolymer in an amount of about 49 to 51%w/w. The dispersion has a flash point greater than 300°F (149°C), a milky white with a faint ester-like odour, a pH of about 6.5 to 7.5, a boiling point of 212°C (760mmHg), a vapour pressure of 23 mbar (20°C), a relative density of 1.04 (20°C), a viscosity of 200 to 700mPa.s and is miscible in water. This copolymer is traditionally used for coating in the paper industry but to date has not been used in the preparation of carpet tiles. Prior to addition to the precoating composition, the copolymer is suitably diluted to 25% solids with water.

The composition also contains a copolymer derived from an acrylic ester and a methacrylic ester. This copolymer facilitates the acrylic styrene sticking to thermoplastic materials such as PVC used in the manufacture of the carpet. A suitable polymer is Acronal® AX 8281 AP available from BASF Aktiengesellschaft. This dispersion is white in colour with faint odour and a pH value of 7 to 8, a density of about 1.02 g/cm³ at 20°C, a dynamic viscosity of 300 to 1500mPa.s (23°C) and a solids content of 48.5 to 51.5%. The polymeric dispersion is miscible in water. This acrylic addition raises the glass temperature in the aqueous solution. If used alone this acrylic resin is very brittle. Inclusion together with the acrylate/styrene copolymer allows the composition to stick/lock to the backing layer. Suitably about 20% dry weight of Acronol is added (16% volume).

The precoating composition contains a thickener. Suitably the thickener is a thickener suitable for polymer dispersions, for example, an acrylic copolymer containing carboxyl groups. A suitable thickener is Latekoll® D available from BASF Aktiengesellschaft and is a low-viscosity, milky white anionic dispersion. Latekoll® D has a solids content (ISO 1625) of about 25±1 %, a pH value of 2.3 to 3.3, a viscosity at 23°C, shear rate 250 s⁻¹ of 2-10mPa.s and a density at 20°C of about 1.05g/cm³. The thickener helps to prevent the precoating composition from wicking down holes in the primary backing layer. The thickener is suitably prediluted with water to form a homogeneous solution prior to the addition to the resins.

### Preparation of the precoating composition

The copolymer derived from an acrylic or methacrylic monomer and a styrenic monomer and the copolymer derived from an acrylic ester and a methacrylic ester are first mixed followed by addition of the thickener which has been prediluted with water, followed by addition of additional water. About 20% (of the dry weight of S728) of the AX8281 Acronal® is added to the Acronal® S728 and suitably 1 to 2wt% (up to 5%) of thickener added. It is important not to add too much thickener as strike through of the primary backing may occur. It is also important not add thickener to the base material followed by addition of water as the composition may overthicken locally. It is also important not to add the water/thickener solution too quickly to the Acronal® as this will result in curdling and an ineffective solution. The amount of AX8281 can range from 10% of the dry weight of S728 up to 40%, for example 20 to 35%. When present, the antibacterial, fire retardant and surfactant may be added at the end of the mixing cycle after the addition of water and thickener.

### Application of the precoating composition to the primary backing layer

It is provided a method of making a precoated primary backing comprising: providing a primary backing layer including a fibrous face and an underside, precoating the underside of the primary backing layer by applying to the layer the precoating composition used in the present invention. There is also provided a precoated primary backing comprising: a primary backing having a fibrous face and an underside; a precoat layer on the underside of the primary backing formed from a composition comprising at least copolymer derived from an acrylic or methacrylic monomer and a styrenic monomer; at least one copolymer derived from an acrylic ester and a methacrylic ester; at least one thickener; and water. As above, the precoat composition may further comprise an antibacterial, a fire retardant and/or a surfactant. A suitable antibacterial is zinc omadine. A suitable fire retardant is aluminium hydroxide. A suitable surfactant is sodium lauryl sulphate.

The precoating composition can be applied to the fibre layer by roller coating, spraying or by foaming. The amount of precoating used for a 850g/m² carpet can be up to 100g/m². The precoating composition serves to lock in the fiber on the back of the primary carpet tile backing, such as a tufted back layer and acts as a barrier, separating the fibrous carpet from the underlying backing. The pre-coating is suitably heated to drive off sufficient water to provide a solid barrier and to allow for possible cross-linking.

The precoating layer has a thickness which is typically quite thin. Suitably the thickness is about 0.005mm to 0.1mm when dry. The thickness is controlled by the use of spray nozzles and spray pressure. The precoating layer is placed directly on and against the back surface of the loop or fibre containing primary backing and is applied in an amount to cover completely the loop backs and to lock in loops so that no mountains or valleys are evident. During processing the copolymers are cured and crosslinked. The resulting precoated product is very flexible.

### Backing layer

The carpet tile includes a backing layer which imparts stability and free-laying properties to the carpet tile.

Prior to applying the backing layer, it is possible to shear the carpet fibres if desired. Shearing is performed to cut the closed loop, tufted yarn on the face surface and to provide for the cut, tufted yarn to have the same general height as the height of the face wear surface fibers.

The backing layer may be formed from one or more layers of a thermoplastic polymer such as described above for the primary backing. In one embodiment the thermoplastic is a vinyl halide. A suitably vinyl halide is PVC (polyvinylchloride). Other suitable backings include bitumen, atactic polypropylene, polyolefin, ethylene vinyl acetate copolymer, thermoplastic elastomers, polyurethanes, PVC/Latex, Bitumen backed latex and polyurethane, polyamines, jute, urethane, polyvinylidine chloride, polyvinyl acetate, polyvinyl butyral, natural or synthetic rubber, polychloroprene. The backing layer may be in the form of a foam, sponge or solid. When in the form of a foam, the backing layer adds resilience and/or stability.

The backing layer can have a range of properties depending on the nature of polymers, plasticizers, stabilizers and fillers used.

Generally about 2.88kg/m² of PVC is required to make carpet. When using the optional precoating composition used in the present invention, whilst it is possible to still use 2.88kg/m², it is desired to reduce the amount of PVC to about 1kg to 2kg/m², with 1.5kg to 1.6kg/m² being particularly suitable and still retain the flexibility. For bitumen tiles 2.8kg/m² of bitumen paste is added.

### Backing composition

In one embodiment the backing is formed from a composition including a filler and a plasticizer together with a thermoplastic polymer such as PVC. In one embodiment of the invention, there is provided the use of recycled glass as filler in a PVC plastisol for the manufacture of a carpet tile. According to another embodiment of the present invention there is provided a composition for preparing a carpet tile comprising: a thermoplastic resin; a plasticizer which is a mixture of an epoxidized soybean oil with an acetic acid ester of castor oil, and a filler. According to another embodiment of the present invention there is provided a composition for preparing a carpet tile comprising: a thermoplastic resin; at least one plasticizer; and recycled glass.

The filler may be limestone or recycled glass or a combination of both recycled glass and limestone in any ratio of both. In a particularly preferred embodiment the filler is recycled glass. As the glass that may be used has a specific gravity of 2.0 to 2.5 and limestone a specific gravity of 2.7, less volume of glass is required than that of limestone. For example for 1357 kg of PVC paste, about 825kg of limestone filler is required whereas only 611kg of recycled glass is required.

The recycled glass fibres have a particle size smaller than sand grains and are prepared by use of a ball mill so that they are round glass particles. They are an inert byproduct (consumer waste) and do not absorb any of the plasticizer oil whereas limestone when used may absorb about 17wt% plasticizer oil.

The recycled glass may be Enviro-glass available from Recycled Glass Mediums Australia Pty Ltd of 95 Wisemans Ferry Road Somersby NSW 2250, Australia and available in particle size ranges less than 0.106mm up to 10mm, for example 2.5mm to 1.5mm, 1.5mm to 0.75mm, 0.75mm to 0.3mm and 0.3mm to 0.106mm.

In one embodiment a 300µm or less fine is used with preference for a fine having a majority of particles of less than 200 microns.

The product is crushed glass - colourless, blue, mixed amber, mixed green, is odourless, inorganic solid, ground and graded glass having a melting point above 800°C, a specific gravity of about 2.5 (this value is generic, the measured specific gravity of the product may be 2) and is insoluble in water.

The recycled glass contains soda lime silica glass of the following chemical composition:

| | |
|---|---|
| Na₂O + K₂O + Li₂O | 12-15% |
| CaO + MgO | 10-13% |
| Al₂O₃ | 1-2% |
| Other oxides (except SiO₂) | 0-1% |
| Bound silica | balance (contains no free silica) |

About 40 to 70wt% of the recycled glass may be used with respect to the total mix of plastisol. Suitably 50 to 61wt% is used.

The plasticizer may be a standard phthalate plasticizer such as DINP, DEHP, DOP, PEG 100, or PEG 200

A particularly preferred plasticizer is the combination of epoxide soy bean oil and a castor oil derivative. In view of the fact that the epoxidised soy bean oil winters (i.e. at low temperatures the oil solidifies), it is difficult to get the required viscosity and consequently when used alone, suffers from plastic migration. Epoxide soy bean oil also does not have a long shelf life. The castor oil derivative results in good viscosity and avoids uptake and migration of the soy bean oil. A suitable composition includes 30% castor oil and 70% soybean oil. A suitable range of plasticizer is 40 to 20wt% castor oil and 60 to 80wt% soybean oil. A viscosity modifier such as an alcohol may be present as required to lower viscosity. A suitable viscosity modifier is ethanol. In one embodiment 5 to 10wt% ethanol may be present.

The combination of epoxidised soy bean oil and a castor oil derivative acts synergistically. Suitably the combination is mixed at room temperature.

A suitable soy bean plasticizer is an epoxidised soya bean oil such as Lankroflex E2307 (ESBO) AG available from Swift and Company Limited, 372 Wellington Road, Mulgrave, Victoria 3170, Australia. Lankroflex E2307 is a low odour epoxy plasticizer containing pure epoxidised soya bean oil and having an oxirane oxygen content of 6.6% min, an iodine value of 2.5 max, a viscosity (30°C) of 350 c-Poise max., an acid value of 0.4 KOH mg/g max., a moisture content of 0.1% max., a specific gravity (25°C) of 0.992 ± 0.01, a refractive index (25°C) of 1.470 ± 0.002 and a colour - 120 APHA max. Lankroflex E2307 is a clear, yellow, oily liquid having a faint fatty odour and is a liquid at normal temperatures. The product has a boiling point above 200°C at 100kPa and a flashpoint of about 314°C, a specific gravity of 0.99 at 25°C, insoluble in water and a viscosity of 350 centipoise at 25°C.

The castor oil derivative is suitably an acetic acid ester of monoglycerides made from fully hydrogenated castor oil such as Grindsted® Soft-n-Safe/C available from Danisco Emulsifiers. The product has a degree of acetylation of about 0.9, an iodine value of 4 max, an acid value of 3 max, a saponification value of about 435 and is in the form of a clear liquid. The product contains octadecanoic acid, 12-(acetyloxy), bis(acetyloxy)propyl ester (about 85%) and octadecanoic acid, 2,3-bis(acetyloxy)propyl ester (about 10%). The product is a liquid at room temperature and is insoluble in water, decomposes above 300°C, and has a flash point above 100°C, a neutral odour, a density of 1.0030 g/ml at 20°C and a vapour pressure of 1.05 x 10⁻⁴ Torr at 123.6°C.

A preferred backing layer is formed from a composition comprising recycled glass and the soy bean oil/castor oil combination. This result is a more renewable and less fossil based product. In such a combination the composition may include up to about 60% thermoplastic (fossil origin)

The combination of plasticizers together with a thermoplastic polymer such as PVC may also be used for making medical plastic products such as medical bags and I.V. tubes.

### Optional additives and layers

The primary backing and backing layer or precoating composition may include any one or more of flame or fire retardants, inert fillers such as limestone or barytes, calcium oxide, carbon-black, antibacterials, surfactants, defoamers, thickeners, dispersing agents, elastomers, antioxidants, colourants, hardeners, plasticizers, UV/heat stabilizers, viscosity modifiers, cross-linking agents and/or tackifiers.

The use of a plasticizer in combination with the thermoplastic resin provides the required flexibility, durability and hardness. The presence of a heat stabilizer stabilizes the thermoplastic and prevents thermal decomposition, a UV stabilizer stabilizes the thermoplastic preventing decomposition as a result of exposure to UV light, calcium oxide ensures any moisture is removed from the mixing process, calcium carbonate (limestone) acts as filler, increasing the volume of the thermoplastic compound mix at reduced cost and a viscosity modifier maintains viscosity to ensure that the mix remains well mixed and in suspension (slowing the dropping out of solids).

The carpet tile can include one or more woven or non-woven layers of glass, fibreglass, polyester, Nylon® or polypropylene such as tissue, mesh or fleece or scrim sheet materials or a combination thereof in the primary backing and backing layer. The scrim material may be employed adjacent to the primary backing or closely adjacent thereto. Glass fiber or tissue materials may be employed within the thermoplastic backing layer to impart dimensional stability and improve laying properties of the carpet tile.

The underside of the backing layer may be provided with an adhesive with a strippable protective layer attached thereto, where, in use the protective layer is stripped off and the carpet tile applied to the floor surface or applied with a pressure sensitive adhesive.

### Application of the backing layer and preparation of the carpet tile

It is provided a method of making a floor covering comprising providing a primary backing having a fibrous face and an underside; precoating the underside of the primary backing layer by applying the precoating composition used in the present invention, and applying a backing layer to the precoated primary backing layer. There is also provided a floor covering comprising: a primary backing having a fibrous face and an underside; a cured precoat layer on the underside of the primary backing formed from a composition comprising at least one acrylic styrene copolymer; at least one copolymer based on acrylic ester and methacrylic ester; at least one thickener; and water, and a backing layer fixed to the primary backing. The precoating composition of this floor coverin may further comprise an antibacterial, a fire retardant and/or a surfactant. A suitable antibacterial is zinc omadine. A suitable fire retardant is aluminium hydroxide. A suitable surfactant is sodium lauryl sulphate. There is also provided a method of making a carpet tile comprising: coating a first layer of a thermoplastic resin plastisol on a support surface; optionally placing a dimensionally stable sheet material onto the top surface of the first layer and heating the layer to gel the layer and position the sheet material; optionally applying a second layer of a thermoplastic resin plastisol onto the gelled surface of the first layer; precoating the underside of a primary backing having a fibrous wear-resistant face with a precoating composition used in the present invention; optionally coating a thermoplastic resin plastisol over the precoat layer; layering the precoated primary backing onto the top surface of the plastisol of the first or second thermoplastic resin layer; heating the carpet so formed to fuse the thermoplastic layers into an integrally-fused backing layer, cooling the carpet, and cutting the carpet into a carpet tile.

In another embodiment there is provided a method of making a floor covering comprising: providing a primary backing having a fibrous face and an underside; applying a backing layer to the primary backing layer, the backing layer including a layer formed from the plasticizer composition of the present disclosure. There is also provided a floor covering comprising: a primary backing having a fibrous face and an underside; and a backing layer fixed to the primary backing, the backing layer including a layer formed from the plasticizer composition of the present disclosure.

There is also provided a method of making a carpet tile comprising: coating a first layer of a thermoplastic resin plastisol on a support surface; optionally placing a dimensionally stable sheet material onto the top surface of the first layer and heating the layer to gel the layer and position the sheet material; optionally applying a second layer of a thermoplastic resin plastisol onto the gelled surface of the first layer, the thermoplastic resin of at least one of the first or second layers formed from the plasticizer composition of the present disclosure; optionally precoating the underside of a primary backing having a fibrous wear-resistant face with a precoat composition of the present disclosure; optionally coating a thermoplastic resin plastisol over the precoat layer; layering the primary backing onto the top surface of the plastisol of the first or second thermoplastic resin layer; and heating the carpet so formed to fuse the thermoplastic layers into an integrally-fused backing layer, cooling the carpet, and cutting the carpet into a carpet tile.

There is also provided carpet tile produced by the methods of the invention.

The carpet tile may be prepared in any suitable manner.

For example, a layer of thermoplastic may be applied/cast in a defined thickness onto the underside of the primary backing layer as a wet plastisol. The coated material is leveled with a doctor blade which levels and smooths the thermoplastic layer and forces the thermoplastic layer into engagement with any glass scrim and the primary backing.

Alternatively, the backing layer may be preformed on a releasable support such as a fluorocarbon, glass fiber endless belt, Teflon® coated fibreglass belt or stainless steel support sheet through casting. The precoated primary backing layer is then laid into the liquid backing layer.

Following application of the backing layer, the carpet is heated to fuse/gel and cure the thermoplastic, cooled and cut into carpet tile sections. Heating may be by use of a heater, radiant panels or heating elements. The heating cures the thermoplastic material and for a tufted carpet, thereby locks back stitches in place, the primary backing is thereby bonded to the backing layer by fibres of the primary backing being embedded in the backing layer. The carpet tile may be heated to a curing temperature within the range of 50°C to 170°C, for example 90°C to 160°C, 100°C to 150°C or 140°C to 150°C. For example for PVC, the plasticizer melts and begins diffusing into particles at 50°C, gelation begins at about 50°C and continues to about 130°C, at which point the particles swell, between 130°C and 170°C the gelation stage ends. At 91°C the polymer flows into a continuous mass.

A suitable apparatus for finishing the carpet tile may be an apparatus including a heater having a chamber to operate at a desired temperature and through which the primary backing and backing layers pass to be heated to provide for plastic deformation of the backing layer; a pair of press rollers to which the primary backing, backing and any additional cushion layers are delivered, after the primary and backing layers have been heated by the heater, to apply a force thereto to cause the layers to bond, and a controller operatively associated with the heater, the controller being configured to maintain the temperature within the chamber to provide for heating of the backing layer so that the backing layer is relatively deformed by the rollers to bond the layers.

During gelling or after gelling the carpet may be passed under an embossing roller which embosses the back of the carpet with indentations, corrugations or the like to form a friction-increasing surface (resisting movement and maintaining position when placed in situ) and assists in consolidating the layers into a unitary product. The consolidated carpet material may then be severed by suitable cutting means into appropriate length sections (for example into squares). The laminated construction may be cooled for example to about 105°C to allow removal of the construction from the support. The construction may then be passed through a heater and raised to about 100°C prior to being engaged by an embossing roller that embosses the thermoplastic layer.

In one embodiment, the backing layer is formed of a layer of thermoplastic such as PVC, a fibreglass scrim and a second thermoplastic layer such as PVC. The first layer of thermoplastic bonds the primary backing to the fiberglass layer, the thickness of the layer suitably being controlled by a doctor blade. The fiberglass layer is to ensure dimensional stability of the carpet tile. The second layer of thermoplastic glues the layers above it and provides the final backing of the carpet tile. The thickness of this layer is also suitably controlled by a doctor blade.

The backing layer may be applied to the primary backing in a continuous fashion to produce an indeterminate length of material which may be subsequently cut as desired to form the carpet tile.

The thickness of each layer may vary depending on whether a solid layer or foam layer is used. For example, the first PVC layer range is dependent on the weight of the PVC backing i.e., 2.64kg/m² would be two layers of 0.88mm, 2kg/m² would be two layers at 0.67mm, while 1.5kg/m² would be two layers at 0.5mm. The overall carpet thickness may suitably be between about 4 and 12 mm, for example about 6mm without foam backing and about 10mm with foam backing.

### Application

The resulting carpet tile is suitable for use is a floor covering in home and/or commercial use. Pressure Sensitive adhesives may be required for installation and the floor tiles can be replaced or rotated as desired. The carpet tiles have dimensional stability with substantially no curling, slipping, buckling, stretching or shrinkage and a low smoke emission.

The invention will now be described with reference to the following examples and the accompanying drawing.

With reference to the drawing, Figure 1 shows a carpet tile 1 composed of a nylon-tufted fibrous face 2, a primary backing 3 such as a non-woven polyester or polypropylene, a precoat 4 formed from the composition used in the present invention, the precoat as shown penetrates the back loops of the nylon fibre layer. The carpet tile includes a PVC chloride backing layer 5, a glass fibre scrim 6 secured between the PVC layer and another PVC layer 7.

The two PVC layers 5, 7 may be replaced with a single backing layer so that the back of the pre-coat may simply be laid into the top surface of a wet, single PVC plastisol backing layer prior to heat fusion of the single backing layer.

The primary backing including the fibre pile is applied to the backing layer. The backing layer is suitably located on a Teflon® coated fiberglass belt that runs over a heating element that heats the layer to cause curing thereof so that the primary backing is bonded to the backing layer by the fibres in the fibre layer becoming embedded in the PVC paste of the backing layer. The laminated structure is then cooled to provide for its removal from the Teflon coated fiberglass belt.

### EXAMPLE 1

A carpet tile similar to that shown in Figure 1 was prepared. The primary backing was a nylon yarn tufted into a polyester or polypropylene primary backing that had been precoated with the precoating composition used in the present invention.

The precoating composition was prepared as follows:

4.0 Litres of Latercol D Thickener (BASF Product) was added to 100 litres of water and mixed by machine mixer for 10 minutes. The resultant solution was added slowly (2 litres per minute) to Acronol S728 51% solids (BASF Product) which machine stirring. Addition of the water/thickener solution to the Acronol S728 slowly ensured that there was no curdling. Prior to addition the Acronol S728 was diluted to 25% solids with water and 20% of AX 8281 Acronol was added to the dry weight of Acronal S728. The solution was allowed to age for 3 days so as to develop the final end point viscosity.

50 to 100g/m² (dried weight) of the precoating composition was applied to the pretufted polyester fibre layer by roller coating, spraying or foaming. This allowed any hills/mountains and valleys to be filled by solution. A PVC layer including fibreglass was then applied. The end carpet had the following properties as compared to a known carpet tile including a latex precoat such as EVA.

| | Prior Art | Precoating composition used in the present invention |
|---|---|---|
| Carpet (Example wt%) | 850g/m² | 850g/m² |
| Primary Backing | 120g/m² | 120g/m² |
| Precoat | | 50-100g/m² |
| Latex (EVA) | 850g/m² | |
| PVC layer | 2830g/m² | 1500-2000g/m² |
| Fibreglass | 50g/m² | 50g/m² |
| Total Tile Weight | 4700g/m² | 2570-3120g/m² |

It can be seen that the amount of precoating composition used in the present invention required is significantly less than the amount of latex required in the prior art carpet, allowing the weight and thickness of the PVC layer to also be reduced. The resulting tile was very flexible (due in part to the flexibility of the precoating composition) and had a significantly lower overall weight than the prior art tile. No latex need be applied in the carpet tile of the present invention. It is also not necessary to use any PVC precoat prior to application of the precoating composition to fill any valleys.

The carpet tile produced was also found to have better antistatic properties, better fire test, better water penetration resistance (no wet upcurl issues) and sustainability.

### EXAMPLE 2

A polyvinyl chloride composition for forming a backing layer of a carpet tile was prepared. The composition comprised:
polyvinyl chloride copolymer resin (100% polyvinyl homopolymer resin can be substituted for the copolymer resin);
recycled glass in an amount of 2.15kg per kg of resin. The glass was supplied from a waste depot glass recycling plant and was in the form of ≤ 300 microns having a specific gravity of 2g/cm³; and
a mix of epoxidised soy bean oil (75wt%) with an acetic acid of Castor Bean Oil (25wt%) supplied as Grindsted Soft-n-Safe/c (a Danisco Product) which was diluted with ethanol to reach the desired viscosity. A suitable viscosity range is 200 cps ± 10 cps (using a 2.5 rpm No. 1 Spindle Brookfield Viscometer). Since the specific gravity of glass is less than that of the standard limestone used, which is 2.7g/cm³, the filler ratio was adjusted to compensate for this. For example, whereas the normal filler addition of limestone would be 2.91 kg per kg of resin, with recycled glass the filler addition was 2.15 kg/kg or resin.

The composition was used in the preparation of a carpet tile and compared to a prior art carpet tile produced using a polyvinylchloride composition including a standard plasticizer and limestone filler. The standard PVC composition used included:
- Plasticizer Oil: DINP (diisononyl phthalate);
- PVC Copolymer: PA 1384 (Arkema Lacovyl® - a vinyl chloride and 4% vinyl acetate copolymer) or KCH12 (same chemistry);
- PVC Homopolymer: KBM-10 (Hanwha Corp. -PVC resin);
- Heat Stabilizer: CZ116
- UV Stabilizer: Flexipol Black 600
- Calcium Oxide: CaO
- Calcium Carbonate (Limestone): Circal 60/15
- Viscosity Modifier: Polyethylene glycol 400

The results are shown in the following table:

| | Prior Art* | PVC composition used in the present invention* |
|---|---|---|
| Plasticizer Oil mix | DINP** 240kg/mix | Grinsted Soft-n-Safe/c Lankroflex E2397 240kg/mix |
| Heat Stabilizer | 2kg/mix | - |
| Viscosity Modifier | 3 kg/mix | - |
| Carbon black | 1.5kg/mix | 0-1.5 kg/mix |
| PVC copolymer*** | 223 kg/mix | 223 kg/mix |
| PVC homopolymer*** | 60k/mix | 60k/mix |
| Calcium Oxide CaO | 2.5kg/mix | 2.5kg/mix |
| Limestone | 825kg/mix | |
| Recycled glass | | 611 kg/mix |
| Total | 1357 kg/mix | 1136 kg/mix |
| % Recycled or Renewable (by weight) | 0% | 74.9% |

| | | |
|---|---|---|
| *Both mixes had the same volume ** DINP (diisononyl phthalate) can be replaced by DIDP, DEHP or DOP plasticizers - diisodecyl phthalate (DIDP); and di-2-ethyl hexyl phthalate (DEHP), also sometimes called DOP. *** The copolymer/homopolymer combination may be replaced with 283kg/mix of P602, 360NA or KL701 polyvinylchloride homopolymers with 215kg/mix of the plasticizer oil instead of 240kg/mix. P602 is Pevikon® P602 available from Norsk Hydro. 360NA is SolVin® 360NA available from Solvay S.A. KL 701 is available from Hanwha Polymers Korea. | | |

The PVC composition used in the present invention replaces the traditional based plasticizer with a renewable source and replaces the traditional fine limestone filler with glass fines. The resulting formulation is 26% unstainable and has the added advantage that it is cheaper than the prior art product.

By inclusion of the glass and plasticizers used in the present invention, the following advantages are seen:

| | Glass | Oil |
|---|---|---|
| Sustainability | * | * |
| Less Plasticizer Absorption | * | |
| No heat stabilizer required | | *Epoxidised soybean is very heat stable, the castor bean oil is not so stable. |
| No viscosity modified required | | * |

Mixtures from 5% of Grinsted Soft-n-Safe at 5% increments up to 20% were tried, suitably only at 20% and greater does the plastisol remain stable without plasticizer migration and the correct viscosity properties.

## Claims

1. A method of making a carpet tile comprising:
coating a first layer of a PVC thermoplastic resin plastisol on a support surface;
optionally placing a dimensionally stable sheet material onto the top surface of the first layer and heating the layer to gel the layer and position the sheet material;
optionally applying a second layer of a PVC thermoplastic resin plastisol onto the gelled surface of the first layer;
precoating the underside of a primary backing having a fibrous wear-resistant face with a precoating composition for making a carpet tile comprising:
at least one copolymer derived from an acrylic or methacrylic monomer and a styrenic monomer;
at least one copolymer derived from an acrylic ester and a methacrylic ester;
at least one thickener; and
water;
optionally coating a thermoplastic resin plastisol over the precoat layer;
layering the precoated primary backing onto the top surface of the plastisol of the first or second thermoplastic resin layer;
heating the carpet so formed to fuse the thermoplastic layers into an integrally-fused backing layer;
cooling the carpet; and
cutting the carpet into a carpet tile.

2. The method according to claim 1:
wherein the step of applying a second layer of a thermoplastic resin plastisol onto the gelled surface of the first layer is performed, and wherein the thermoplastic resin of at least one of the first or second layers is formed from a composition of either (a) a thermoplastic resin; at least one plasticizer and recycled glass or recycled glass and limestone or (b) a thermoplastic resin; a plasticizer which is a mixture of an epoxidized soybean oil with an acetic acid ester of castor oil and where necessary a viscosity modifier, and a filler.

3. The method according to claim 2, wherein the carpet tile is an 850 g/m² carpet and the amount of precoating is up to 100 g/m².

4. A carpet tile produced by the method of any one of claims 1 to 3.

## Patentansprüche

1. Verfahren zur Herstellung einer Teppichbodenfliese, umfassend:
das Aufschichten einer ersten Schicht eines PVC-thermoplastischen Harz-Plastisols auf eine Trägeroberfläche;
optional das Aufbringen eines dimensional stabilen Folienmaterials auf die obere Oberfläche der ersten Schicht und das Erwärmen der Schicht, um die Schicht zu gelifizieren und das Folienmaterial zu positionieren;
optional das Aufbringen einer zweiten Schicht eines PVC-thermoplastischen Harz-Plastisols auf die gelifizierte Oberfläche der ersten Schicht;
das Vorbeschichten der Unterseite eines primären Teppichgrunds, der eine faserförmige, abnutzungsbeständige Seite aufweist, mit einer Vorbeschichtungszusammensetzung zur Herstellung einer Teppichbodenfliese, umfassend:
mindestens ein Copolymer, abgeleitet von einem acrylischen oder methacrylischen Monomer und einem styrolischen Monomer;
mindestens ein Copolymer, abgeleitet von einem acrylischen Ester und einem methacrylischen Ester;
mindestens ein Verdickungsmittel; und
Wasser;
optional das Aufschichten eines thermoplastischen Harz-Plastisols über der vorbeschichteten Schicht;
Aufschichten des vorbeschichteten primären Teppichgrunds auf die obere Oberfläche des Plastisols der ersten oder zweiten thermoplastischen Harzschicht;
das Erwärmen des so gebildeten Teppichbodens, um die thermoplastischen Schichten zu einer integral verschmolzenen Teppichgrundschicht zu verschmelzen;
das Abkühlen des Teppichbodens; und
das Schneiden des Teppichbodens zu einer Teppichbodenfliese.

2. Verfahren nach Anspruch 1:
wobei der Schritt des Aufbringens der zweiten Schicht eines thermoplastischen Harz-Plastisols auf die gelifizierte Oberfläche der ersten Schicht durchgeführt wird und wobei das thermoplastische Harz von mindestens einem von den ersten oder zweiten Schichten gebildet ist aus einer Zusammensetzung von entweder (a) einem thermoplastischen Harz; mindestens einem Weichmacher und recyceltem Glas oder recyceltem Glas und Kalkstein oder (b) einem thermoplastischen Harz; einem Weichmacher, der ein Gemisch ist aus einem epoxydierten Sojaöl mit einem Essigsäureester von Rizinusöl und, soweit notwendig, einem Viskositätsmodifizierungsmittel und einem Füllstoff.

3. Verfahren nach Anspruch 2, wobei die Teppichbodenfliese ein Teppichboden von 850 g/m² ist und die Menge der Vorbeschichtung bis zu 100 g/m² beträgt.

4. Teppichbodenfliese, hergestellt nach dem Verfahren nach einem der Ansprüche 1 bis 3.

## Revendications

1. Procédé de fabrication d'une dalle de moquette comprenant :
le revêtement d'une première couche d'un plastisol de résine thermoplastique en PVC sur une surface de support ;
le placement éventuel d'un matériau en feuille dimensionnellement stable sur la face supérieure de la première couche et le chauffage de la couche pour gélifier la couche et positionner le matériau en feuille ;
l'application éventuelle d'une seconde couche d'un plastisol de résine thermoplastique en PVC sur la surface gélifiée de la première couche ;
le pré-revêtement de la face inférieure d'une étoffe support ayant une face fibreuse résistante à l'usure avec une composition de pré-revêtement pour fabriquer une dalle de moquette comprenant :
au moins un copolymère dérivé d'un monomère acrylique ou méthacrylique et d'un monomère styrénique ;
au moins un copolymère dérivé d'un ester acrylique et d'un ester méthacrylique ;
au moins un épaississant ; et
de l'eau ;
le revêtement éventuel d'un plastisol de résine thermoplastique sur la couche de pré-revêtement ;
la superposition de l'étoffe support pré-revêtue sur la face supérieure du plastisol de la première ou seconde couche de résine thermoplastique ;
le chauffage de la moquette ainsi formée pour thermofixer les couches thermoplastiques en une couche de support thermofixée solidairement ;
le refroidissement de la moquette ; et
la découpe de la moquette en une dalle de moquette.

2. Procédé selon la revendication 1 :
dans lequel l'étape d'application d'une seconde couche d'un plastisol de résine thermoplastique sur la surface gélifiée de la première couche est réalisée, et dans lequel la résine thermoplastique d'au moins l'une des première ou seconde couches est formée à partir d'une composition constituée soit (a) d'une résine thermoplastique ; d'au moins un plastifiant et de verre recyclé ou de verre recyclé et de calcaire soit (b) d'une résine thermoplastique ; d'un plastifiant qui est un mélange d'une huile de soja époxydée avec un ester d'acide acétique d'huile de ricin et si nécessaire, un modificateur de viscosité, et d'une charge.

3. Procédé selon la revendication 2, dans lequel la dalle de moquette est une moquette de 850 g/m² et la quantité de pré-revêtement va jusqu'à 100g/m².

4. Dalle de moquette produite par le procédé selon l'une quelconque des revendications 1 à 3.
